# EUROPÄISCHE PATENTSCHRIFT

(11) **EP 1 820 675 B1**
(45) Veröffentlichungstag und Bekanntmachung des Hinweises auf die Patenterteilung: **02.04.2008**
(21) Anmeldenummer: 07002871.7
(22) Anmeldetag: 10.02.2007
(51) Int. Cl.: B60G 21/055, F16F 9/12

(54) **Stabilisatoranordnung**
Stabiliser assembly
Agencement de stabilisateur

(30) Priorität: 21.02.2006 DE 102006008417
(43) Veröffentlichungstag der Anmeldung: 22.08.2007
(73) Patentinhaber: ZF FRIEDRICHSHAFEN AG, 88046 Friedrichshafen (DE)
(72) Erfinder: Münster, Martin, 88048 Friedrichshafen (DE); Thomä, Achim, Dr., 97493 Bergheinfeld (DE)

(56) Entgegenhaltungen:
- DE-A1- 4 229 025
- DE-A1- 4 442 223
- DE-A1- 10 360 291

## Beschreibung

Die Erfindung betrifft eine Stabilisatoranordnung gemäß dem Oberbegriff von Patentanspruch 1.

Aus dem Stand der Technik sind bereits aktiv verstellbare Stabilisatoranordnungen bekannt. Dabei wird ein Schwenkmotor eingesetzt, der zwei Stabilisatorabschnitte in Umfangsrichtung zueinander verdreht, um die Abstützkraft des Stabilisators zu verändern. Ein wesentliches Konstruktionsproblem besteht in der Verbindung der Stabilisatorabschnitt mit dem Schwenkmotor. Im idealen Fall reicht eine einfache Keilprofilverbindung eines vom Gehäuse und einer Schwenkmotorwelle mit den Stabilisatorabschnitten. In der Praxis muss aufgrund der Vibrationen dafür gesorgt werden, dass der Schwenkmotor an mindestens einem Stabilisatorabschnitt axial fixiert ist.

Aus der gattungsbildenden DE 42 29 025 A1 ist ein Schwenkmotor für einen Kraftfahrzeugstabilisator bekannt, für den zwei Befestigungstechnologien vorgesehen sein können. Zum einen besteht die Möglichkeit, dass der Stabilisatorabschnitt mit einem kleinen Befestigungsflansch ausgeführt ist, der mit einem Deckel direkt verschweißt ist. Der Innendurchmesser des Deckels entspricht in etwa dem Torsionsdurchmesser des Stabilisators.

An der Motorwelle ist ein Befestigungsflansch angeschweißt, der mit einem stabilisatorseitigen Flansch verschraubt ist. Diese Konstruktion gewährleistet eine axial gesicherte Position des Schwenkmotors zum Stabilisator.

Die DE 100 16 639 C1 offenbart einen geteilten Stabilisator mit einem Schwenkmotor. Die beiden Stabilisatorabschnitte verfügen jeweils über einen Flansch, der mit dem Schwenkmotor verschraubt wird. Zwischen dem Flansch des Stabilisators und der Motorwelle ist ein stirnverzahntes Adapterstück angeordnet. Die Verbindung des anderen Stabilisatorabschnitts mit dem Gehäuse erfolgt über eine Schraubverbindung mit einem gehäuseseitigen Zwischenring. In der Realität stellt sich jedoch das Problem ein, dass aus dem Materialvolumen des Stabilisatorabschnitts kaum ein Flansch mit einer ausreichenden Wandstärke für eine Schraubverbindung formbar ist.

Aufgabe der vorliegenden Erfindung ist es, eine Platz sparende und den Schwenkmotor axial zu einem Stabilisatorabschnitt sichernde Verbindung zu schaffen.

Erfindungsgemäß wird die Aufgabe dadurch gelöst, dass das Gehäuse mit einem nach radial innen geformten Rand ausgeführt ist, der eine Kontaktfläche für eine Schweißverbindung mit der radialen Aufweitung bietet.

Der große Vorteil besteht darin, dass man für den Schwenkmotor keinen eigenständigen Deckel benötigt, sondern die Deckelfunktion teilweise von dem Gehäuse und teilweise von dem Stabilisator mit der radialen Aufweitung übernommen wird. Durch diese Kombination kann man die radiale Aufweitung am Stabilisatorabschnitt in ihrer Ausdehnung begrenzen.

Bei einer Variante ist vorgesehen, dass die radiale Aufweitung des Stabilisatorabschnitts in eine von dem Rand begrenzte Öffnung eingreift. Je nach Ausgestaltung von Rand und Aufweitung kann man zur Verbindung eine l-Schweißnaht oder auch eine Kehlschweißnaht vorsehen.

Alternativ kann die radiale Aufweitung des Stabilisatorabschnitts auf dem umgeformten Rand des Gehäuses anliegen und für eine Kehlschweißnaht oder auch für eine Reibschweißverbindung zwischen dem Stabilisatorabschnitt und dem Gehäuse dienen.

In weiterer vorteilhafter Ausgestaltung wird die Motorwelle im Gehäuse von einer Lagerscheibe geführt. Dadurch wird erreicht, dass in den die Deckel bildenden Bauteilen keine Lagerstellen angeordnet sind, die eine besonders präzise Bearbeitung verlangen und u. U. aufgrund des Schweißverfahrens thermisch belastet sind.

Gemäß einem vorteilhaften Unteranspruch wird die Lagerscheibe axial von dem umgeformten Rand zum Gehäuse fixiert. Beim Umformverfahren kann eine axiale Vorspannung aufgebaut werden, die die Lagerscheibe axial, aber auch in Umfangsrichtung in der vorgesehenen Position hält.

Anhand der folgenden Figurenbeschreibung soll die Erfindung näher erläutert werden.

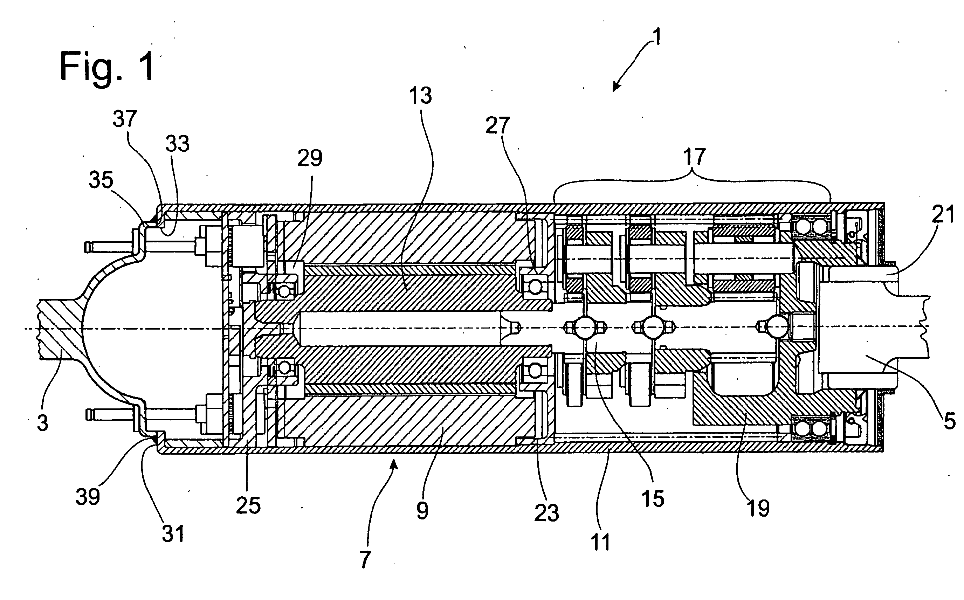

Die einzige Figur zeigt einen Ausschnitt aus einer Stabilisatoranordnung 1 für ein Kraftfahrzeug mit zwei Stabilisatorabschnitten 3; 5, von denen nur die Enden dargestellt sind. Zwischen den Stabilisatorabschnitten 3; 5 ist ein Schwenkmotor 7 angeordnet, der in diesem Fall als ein E-Motor ausgeführt ist. Ein Stator 9 des Schwenkmotors ist in Umfangsrichtung in einem Gehäuse 11, befestigt und nimmt einen Rotor 13 in der Bauform einer Schwenkmotorwelle auf. Die Schwenkmotorwelle kann optional mit einer Getriebeeingangswelle 15 eines Getriebes 17 verbunden sein, das ausgangsseitig mit dem Stabilisatorabschnitt 5 gekoppelt ist. In diesem Fall weist ein Planetenradträger 19 des Getriebes 17 eine Innenverzahnung 21 für ein Keilprofil des Stabilisatorabschnitts 5 auf.

Die Schwenkmotorwelle 13 wird an beiden Enden von einer Lagerscheibe 23; 25 mit Lagern 27; 29 zum Gehäuse 11 positioniert. Axial wird die Lagerscheibe von einem nach radial innen umgeformten Rand 31 des Gehäuses 11, der eine Öffnung 33 begrenzt, zum Gehäuse 11 fixiert. Der umgeformte Rand 31 bietet für den Stabilisatorabschnitt 3, der bezogen auf seinen Torsionsdurchmesser eine radiale Aufweitung 35 aufweist, eine Kontaktfläche 37 für eine Schweißverbindung 39. In dem unteren Halbschnitt greift die radiale Aufweitung 37 in die von dem Rand 31 begrenzte Öffnung 33 ein. Eingezeichnet ist eine Kehlnaht als Schweißverbindung 39, doch wäre auch eine I-Naht denkbar. Der obere Halbschnitt zeigt eine Ausgestaltung, bei der die radiale Aufweitung 37 des Stabilisatorabschnitts 3 auf dem umgeformten Rand 31 des Gehäuses 11 anliegt. Bei dieser Lösung kann man z. B. eine Kehlschweißnaht oder auch eine Reibschweißverbindung 39 vorsehen.

## Patentansprüche

1. Stabilisatoranordnung (1), umfassend einen Schwenkmotor (7) mit einem Gehäuse (11) und einer dazu verdrehbaren Motorwelle (13), wobei jeweils ein Stabilisatorabschnitt (3; 5) mit dem Gehäuse (11) und der Motorwelle (13) verbunden ist und der mit dem Gehäuse (11) verbundene Stabilisatorabschnitt (3) endseitig eine radiale Aufweitung (35) aufweist, die für das Gehäuse (11) einen Deckel bildet,
**dadurch gekennzeichnet,**
**dass** das Gehäuse (11) mit einem nach radial innen geformten Rand (31) ausgeführt ist, der eine Kontaktfläche (37) für eine Schweißverbindung (39) mit der radialen Aufweitung (35) bietet.

2. Stabilisatoranordnung nach Anspruch 1,
**dadurch gekennzeichnet,**
**dass** die radiale Aufweitung (35) des Stabilisatorabschnitts (3) in eine von dem Rand (31) begrenzte Öffnung (33) eingreift.

3. Stabilisatoranordnung nach Anspruch 1,
**dadurch gekennzeichnet,**
**dass** die radiale Aufweitung (35) des Stabilisatorabschnitts (3) auf dem umgeformten Rand (31) des Gehäuses (7) anliegt.

4. Stabilisatoranordnung nach Anspruch 1,
**dadurch gekennzeichnet,**
**dass** die Motorwelle (13) im Gehäuse (11) von einer Lagerscheibe (25; 27) geführt wird.

5. Stabilisatoranordnung nach Anspruch 4,
**dadurch gekennzeichnet,**
**dass** die Lagerscheibe (25) axial von dem umgeformten Rand (31) zum Gehäuse (11) fixiert wird.

## Claims

1. Stabilizer arrangement (1), comprising a pivoting motor (7) having a housing (11) and a motor shaft (13) which can rotate with respect to the former, in each case one stabilizer section (3; 5) being connected to the housing (11) and the motor shaft (13), and the stabilizer section (3) which is connected to the housing (11) having, on the end side, a radial widened portion (35) which forms a cover for the housing (11), **characterized in that** the housing (11) is configured with a radially inwardly shaped edge (31) which provides a contact face (37) for a welded joint (39) with the radial widened portion (35).

2. Stabilizer arrangement according to Claim 1, **characterized in that** the radial widened portion (35) of the stabilizer section (3) engages into an opening (33) which is delimited by the edge (31).

3. Stabilizer arrangement according to Claim 1, **characterized in that** the radial widened portion (35) of the stabilizer section (3) rests on the shaped edge (31) of the housing (7).

4. Stabilizer arrangement according to Claim 1, **characterized in that** the motor shaft (13) is guided in the housing (11) by a bearing plate (25; 27).

5. Stabilizer arrangement according to Claim 4, **characterized in that** the bearing plate (25) is fixed axially with respect to the housing (11) by the shaped edge (31).

## Revendications

1. Agencement de stabilisateur (1), comprenant un moteur pivotant (7) avec un carter (11) et un arbre de moteur (13) pouvant tourner par rapport à lui, une portion de stabilisateur (3 ; 5) étant à chaque fois connectée au carter (11) et à l'arbre de moteur (13) et la portion de stabilisateur (3) connectée au carter (11) présentant du côté de son extrémité un élargissement radial (35), qui forme un couvercle pour le carter (11),
**caractérisé en ce que**
le carter (11) est réalisé avec un bord (31) formé radialement vers l'intérieur, qui fournit une surface de contact (37) pour une connexion soudée (39) avec l'élargissement radial (35).

2. Agencement de stabilisateur selon la revendication 1,
**caractérisé en ce que**
l'élargissement radial (35) de la portion de stabilisateur (3) vient en prise dans une ouverture (33) limitée par le bord (31).

3. Agencement de stabilisateur selon la revendication 1,
**caractérisé en ce que**
l'élargissement radial (35) de la portion de stabilisateur (3) s'applique sur le bord façonné (31) du carter (11).

4. Agencement de stabilisateur selon la revendication 1,
**caractérisé en ce que**
l'arbre de moteur (13) est guidé dans le carter (11) par un disque de palier (25 ; 27).

5. Agencement de stabilisateur selon la revendication 4,
**caractérisé en ce que**
le disque de palier (25) est fixé axialement par le bord façonné (31) par rapport au carter (11).
